# EUROPÄISCHE PATENTSCHRIFT

(11) **EP 3 564 077 B1**
(45) Veröffentlichungstag und Bekanntmachung des Hinweises auf die Patenterteilung: **16.12.2020**
(21) Anmeldenummer: 19172196.8
(22) Anmeldetag: 02.05.2019
(51) Int. Cl.: B60R 22/28

(54) **VORRICHTUNG FÜR EINEN SICHERHEITSGURT ZUR ABSORPTION VON GRUNDKRÄFTEN**
DEVICE FOR A SAFETY BELT FOR THE ABSORPTION OF FORCES
DISPOSITIF DE CEINTURE DE SECURITE AVEC APSORPTION DE FORCES

(30) Priorität: 05.05.2018 DE 102018110836; 12.10.2018 DE 102018125325
(43) Veröffentlichungstag der Anmeldung: 06.11.2019
(73) Patentinhaber: Osann GmbH, 78244 Gottmadingen (DE)
(72) Erfinder: Sklenarz, Johannes, 5505 Muehlbach am Hochkoenig (AT)
(74) Vertreter: Bergmeier, Ulrich

(56) Entgegenhaltungen:
- DE-A1- 2 324 595
- DE-A1- 3 829 982
- DE-A1- 3 900 066
- DE-A1-102015 224 611

## Beschreibung

Die vorliegende Erfindung betrifft eine Vorrichtung für einen Sicherheitsgurt eines Auto- und/oder Kindersitzes zum teilweisen absorbieren einer bei Rückhaltefällen auftretenden Gurtkraft mit zwei Umlenkelementen, die zueinander in Längsrichtung der Vorrichtung einen ersten Abstand aufweisen und über die der dafür vorgesehene Sicherheitsgurt im bestimmungsgemäßen Gebrauch der Vorrichtung derart umlenkbar ist, dass eine sich zwischen den beiden Umlenkelementen anordenbare Gurtreserve des Sicherheitsgurts einem Vergleich zum ersten Abstand größer Länge aufweist. Des Weiteren betrifft die Erfindung einen Kindersitz mit einer derartigen Vorrichtung.

Aus der DE 201 11 219 U1 ist ein Gurtkraftbegrenzer für einen Sicherheitsgurt bekannt, der eine Umlenkungsaufnahme für den Sicherheitsgurt umfasst, die aus mindestens zwei an einer Trägerplatte beabstandet zueinander angeordneten Umlenkbolzen besteht. Ferner umfasst der Gurtkraftbegrenzer eine zwischen den beiden Umlenkbolzen zugkraftabhängig von dem Sicherheitsgurt veränderbare Spanneinrichtung mit einem Umlenkkopf, der den Sicherheitsgurt im Wesentlichen über die gesamte Breite derart untergreift, dass der Sicherheitsgurt um die maximale Auslenkungshöhe der Spanneinrichtung gegenüber den Umlenkbolzen abgehoben und um diese abschnittsweise herumlaufend gespannt ist, wobei der Sicherheitsgurt mit einem Ende an einem ersten Fixpunkt und mit dem anderen Ende an einem zweiten Fixpunkt befestigt und der Gurtkraftbegrenzer dazwischen angeordnet ist. Nachteilig hierbei ist, dass bei Stauchung der veränderbaren Spanneinrichtung die gegenüber dem Sicherheitsgurt aufgebrachte Kraft mit zunehmender Stauchung anwächst. Hierdurch kann die bei Rückhaltefällen auftretende Gurtkraft nicht ausreichend absorbiert werden. Ein weiterer Nachteil besteht darin, dass nach mehrmaliger Aktivierung der Spanneinrichtung eine Ermüdung dieser eintreten kann. Infolgedessen ist die Funktionsfähigkeit des Gurtkraft begrenztes über einen längeren Zeitraum nicht sichergestellt.

Aus der DE 10 2015 224 611 A1 ist eine Sicherheitsgurteinrichtung für ein Kraftfahrzeug bekannt, die ein Gurtband und eine Schikane umfasst. Das Gurtband ist zumindest abschnittsweise durch die Schikane geführt, wobei die Schikane derart ausgelegt ist, dass sie sich bei Überschreiten eines definierten Kraftbegrenzungsniveaus einer Gurtauszugskraft plastisch verformt. Die Schikane ist durch eine mehrfach gebogene, metallische Platte gebildet, an welcher mindestens zwei Durchführöffnungen für eine meanderförmige Führung des Gurtbands ausgebildet sind.

Aufgabe der vorliegenden Erfindung ist es somit, die Absorptionswirkung und/oder die Zuverlässigkeit einer Vorrichtung für einen Sicherheitsgurt eines Auto- und/oder Kindersitzes zu verbessern.

Die Aufgabe wird gelöst durch eine Vorrichtung für einen Sicherheitsgurt eines Auto- und/oder Kindersitzes zum teilweisen absorbieren einer bei Rückhaltefällen auftretenden Gurtkraft mit den Merkmalen des unabhängigen Patentanspruchs 1.

Vorgeschlagen wird eine Vorrichtung für einen Sicherheitsgurt eines Auto- und/oder Kindersitzes zum teilweisen absorbieren einer bei Rückhaltefällen auftretenden Gurtkraft. Die Vorrichtung umfasst zwei Umlenkelemente, die zueinander in Längsrichtung der Vorrichtung einen ersten Abstand aufweisen. Über diese zumindest zwei Umlenkelemente ist der dafür vorgesehene Sicherheitsgurt im bestimmungsgemäßen Gebrauch der Vorrichtung derart umlenkbar, dass eine sich zwischen den beiden Umlenkelementen anordenbare Gurtreserve des Sicherheitsgurts eine im Vergleich zum ersten Abstand größere Länge aufweist. Die Vorrichtung umfasst ein Zerstörungselement. Dieses wird beim Überschreiten eines Gurtkraftschwellwertes zerstört. Das Zerstörungselement verbindet die beiden Umlenkelemente miteinander. Des Weiteren umfasst die Vorrichtung zumindest ein Kraftübertragungsmittel. Das Kraftübertragungsmittel ist derart ausgebildet, dass mit diesem die Gurtkraft auf das Zerstörungselement übertragbar ist. Infolgedessen ist das Zerstörungselement durch die Gurtkraft, die über das Kraftübertragungsmittel auf dieses übertragen wird, bei Überschreiten eines Gurtkraftschwellwertes zerstörbar. Die beiden Umlenkelemente sind derart zueinander angeordnet und/oder miteinander gekoppelt, dass bei zerstörtem Zerstörungselement der erste Abstand zwischen den beiden Umlenkelementen auf einen zweiten Abstand vergrößert war. Vorzugsweise entspricht dieser zweite Abstand der Länge der Gurtreserve des dafür vorgesehenen Sicherheitsgurts. Die beiden Umlenkelemente weisen somit bei zerstörtem Zerstörungselement einen zum ersten Abstand größeren, insbesondere der Länge der Gurtreserve entsprechenden, zweiten Abstand auf. Beim Zerstören des Zerstörungselements wird im Wesentlichen schlagartig ein Teil der Gurtkraft absorbiert. Zusätzlich wird noch weitere Energie dadurch absorbiert, dass dem Körper der angeschnallten Person aufgrund der Gurtreserve ein zusätzlicher Weg zum Abfangen der auftretenden Gurtkräfte zur Verfügung gestellt wird. Vorteilhafterweise kann hierdurch die Absorptionswirkung der Vorrichtung verbessert werden. Ein weiterer Vorteil besteht darin, dass das Zerstörungselement nach seiner Zerstörung ausgetauscht oder repariert werden muss, um die Vorrichtung erneut nutzen zu können. Eine durch mehrmalige Betätigung des Zerstörungselements einhergehende Materialermüdung ist somit ausgeschlossen. Infolgedessen ist stets eine zuverlässige Funktionsfähigkeit der Vorrichtung gewährleistet. Die Vorrichtung zeichnet sich somit ferner durch eine sehr hohe Zuverlässigkeit aus.

Erfindungsgemäss wird das Zerstörungselement in Längsrichtung der Vorrichtung mit der entsprechenden Gurtkraft beaufschlagt. Hierdurch ist eine sehr kompakte Bauform der Vorrichtung möglich. Diesbezüglich ist erfindungsgemäss vorgesehen, dass das Zerstörungselement über das Kraftübertragungsmittel auf Zug belastbar ist.

Auch ist es vorteilhaft, wenn das Zerstörungselement derart ausgebildet ist, dass dieses Zugkräfte und/oder Druckkräfte aufnehmen kann. Wenn das Zerstörungselement derart ausgebildet ist, dass es Zugkräfte aufnehmen kann, kann hierdurch vorteilhafterweise sichergestellt werden, dass bei intaktem Zerstörungselement der erste Abstand zwischen den beiden Umlenkelementen nicht vergrößert werden kann. Wenn das Zerstörungselement zusätzlich oder alternativ derart ausgebildet ist, dass es Druckkräfte aufnehmen kann, kann hierdurch vorteilhafterweise sichergestellt werden, dass bei intaktem Zerstörungselement der erste Abstand zwischen den beiden Umlenkelementen nicht verkleinert werden kann.

Vorteilhaft ist es, wenn das Zerstörungselement aus einem sich bei Überschreiten der Gurtschwellkraft irreversibel verformbaren oder zerreißbaren Material, insbesondere einem Gummi oder einem Kunststoff, ausgebildet ist. Vorteilhaft ist es, wenn das Zerstörungselement zerreißbar und/oder irreversibel verformbar ist. Ferner ist es vorteilhaft, wenn das Zerstörungselement hierfür aus einem derartigen Gummi, Kautschuk, Elastomer oder Kunststoff, insbesondere aus einem plastisch verformbaren Kunststoff, ausgebildet ist.

Um die Herstellkosten der Vorrichtung möglichst gering zu halten, ist es vorteilhaft, wenn das Zerstörungselement ein Textilelement ist. Diesbezüglich ist es ferner vorteilhaft, wenn das Zerstörungselement ein band- oder seilförmiges Textilelement ist.

Auch ist es vorteilhaft, wenn das Zerstörungselement eine Sollbruchstelle aufweist. Unter dem Begriff Sollbruchstelle ist ein Punkt, Abschnitt oder Bereich des Zerstörungselement zu verstehen, der schwächer als der Rest ausgebildet ist. Dies kann beispielsweise durch eine Materialschwächung realisiert sein. Des Weiteren ist der Begriff "Sollbruchstelle" nicht auf ein Brechen eingeschränkt. Vielmehr ist jegliche Art von Zerstörung durch diesen Begriff umfasst, wie beispielsweise "Zerreißen".

Vorteilhafterweise ist das Zerstörungselement aus einem Material ausgebildet, das zerreißen oder zerbrechen kann.

Vorteilhaft ist es, wenn die Sollbruchstelle durch zumindest eine Naht ausgebildet ist. Hierdurch kann sehr einfach und kostengünstig über die Auslegung dieser zumindest einen Naht der Gurtkraftschwellwert festgelegt werden.

Vorteilhaft ist es, wenn das Zerstörungselement, zumindest eine Längsnaht aufweist, die sich zumindest über einen Teilabschnitt des Zerstörungselements in dessen Längsrichtung erstreckt. Zusätzlich oder alternativ ist es vorteilhaft, wenn das Zerstörungselement zumindest eine Quernaht aufweist, die sich in Querrichtung des Zerstörungselements erstreckt. Auch ist es vorteilhaft, wenn sich zumindest eine Quernaht mit zumindest einer Längsnaht kreuzt. Anhand der Anzahl und/oder Ausprägung der Längsnähte und/oder Quernähte kann die Schwellkraft definiert werden, bei der das Zerstörungselement, bzw. dessen Nähte, zerstört werden.

Auch ist es vorteilhaft, wenn das Zerstörungselement ein dem ersten Umlenkelemente zugeordnetes erstes Teil und ein dem zweiten Umlenkelemente zugeordnetes zweites Teil umfasst, die über die Sollbruchstelle miteinander verbunden sind. Vorteilhafterweise muss somit bei einer Zerstörung des Zerstörungselements nicht zwingend das gesamte Zerstörungselement ersetzt werden. Stattdessen reicht es aus, lediglich die Sollbruchstelle zu erneuern. Des Weiteren kann hierdurch vorteilhafterweise der genaue Ort festgelegt werden, an dem das Zerstörungselement zerstört, d.h. insbesondere zerbrochen oder zerrissen, werden soll.

Vorteilhaft ist es, wenn der erste Teil und der zweite Teil des Zerstörungselements einen gemeinsamen Überlappungsbereich aufweisen. Auch ist es vorteilhaft, wenn die beiden Teile in ihrem gemeinsamen Überlappungsbereich miteinander vernäht sind. Infolgedessen ist es diesbezüglich vorteilhaft, wenn zumindest in diesem Überlappungsbereich zumindest eine Naht, insbesondere eine Längsnaht und/oder eine Quernaht, ausgebildet ist.

Auch ist es vorteilhaft, wenn die zumindest eine Längsnaht und die zumindest eine Quernaht mit einem zueinander identischen Faden oder mit einem zueinander unterschiedlichen Faden ausgebildet sind.

Um die beiden Umlenkelemente über das Zerstörungselement im ersten Abstand halten zu können, ist es vorteilhaft, wenn die beiden Teile jeweils mit ihrem der Sollbruchstelle abgewandten Ende, insbesondere lösbar, gelenkig und/oder formschlüssig, mit dem jeweils zugeordneten Umlenkelemente verbunden sind. Bei einer lösbaren Befestigung kann das zerstörte Zerstörungselement sehr leicht von den Umlenkelementen entfernt und erneuert werden. Bei einer gelenkigen Verbindung der beiden Teile mit dem jeweils zugeordneten Umlenkelement kann sichergestellt werden, dass keine Scherkräfte auf das Zerstörungselement einwirken. Eine gelenkige Verbindung kann beispielsweise durch eine Schlinge realisiert sein, die formschlüssig in einer Ausnehmung des jeweiligen Umlenkelements aufgenommen ist.

Vorteilhaft ist es, wenn die Umlenkelemente jeweils einen Fixiermechanismus umfassen, mit dem der dafür vorgesehene Sicherheitsgurt, insbesondere lösbar, mit dem zugeordneten Umlenkelement fixiert werden kann. Hierdurch kann ein Verrutschen der Vorrichtung in Längsrichtung des Sicherheitsgurtes verhindert werden.

Die Fixiermechanismen der beiden Umlenkelemente können vorteilhafterweise als Kraftübertragungsmittel ausgebildet sein, wenn diese derart ausgebildet sind, dass die Gurtkraft, insbesondere unmittelbar, auf das jeweilige Umlenkelement übertragbar ist. Hierdurch kann vermieden werden, dass die Gurtreserve bei Auftreten einer in Längsrichtung des Sicherheitsgurtes wirkenden Gurtkraft durch die Fixiermechanismen der Umlenkelemente hindurchrutscht. Stattdessen wird die an beiden Stirnseiten der Vorrichtung anliegende Gurtkraft über die Fixiermechanismen unmittelbar auf die Umlenkelemente übertragen, so dass diese voneinander weggerichtet kraftbeaufschlagt sind. Die von den Umlenkelementen aufgenommene Kraft kann wiederum, insbesondere unmittelbar, auf das Zerstörungselement übertragen werden, das diese bis zum Erreichen des Gurtkraftschwellwertes im ersten Abstand hält.

Vorteilhaft ist es, wenn der Fixiermechanismus zwei sich in Querrichtung der Vorrichtung erstreckende und/oder in Hochrichtung der Vorrichtung übereinander angeordnete Klemmbalken umfasst, zwischen denen der Sicherheitsgurt kraft- und/oder formschlüssig fixierbar ist. Hierdurch kann eine sichere Beklemmung des Sicherheitsgurtes sichergestellt werden, da dieser über seine gesamte Breite geklemmt wird.

Um den Sicherheitsgurt schnell und einfach an den Umlenkelementen fixieren zu können, ist es vorteilhaft, wenn die beiden Klemmbalken des jeweiligen Fixiermechanismus in Querrichtung der Vorrichtung an ihrem einen Ende über ein Gelenk und/oder an ihrem anderen Ende über einen Verschluss miteinander verbunden sind. Der Verschluss kann hierbei insbesondere ein Schnellverschluss, insbesondere ein Schnappverschluss, sein.

In einer vorteilhaften Weiterbildung der Erfindung umfasst die Vorrichtung ein in Längsrichtung zwischen den beiden Umlenkelementen angeordnetes Leitelement. Dieses Leitelement dient zum zumindest Führen der Gurtreserve, d.h. desjenigen Abschnitts des Sicherheitsgurtes, der sich zwischen den beiden Umlenkelementen befindet.

Vorteilhaft ist es, wenn das Leitelement einen gegenüber den Umlenkelementen in Hochrichtung der Vorrichtung versetzten Umlenkabschnitt aufweist. Hierdurch ist der Umlenkabschnitt derart ausgebildet, dass mit diesem der Sicherheitsgurt in Hochrichtung der Vorrichtung gegenüber den beiden Umlenkelementen, insbesondere im Umfang seiner Gurtreserve, auslenkbar ist.

Vorteilhaft ist es, wenn das Leitelement als Kraftübertragungsmittel ausgebildet ist. Dies kann insbesondere dadurch sichergestellt werden, wenn das Leitelement vorteilhafterweise derart ausgebildet ist, dass mittels diesem eine in Hochrichtung der Vorrichtung auf den Umlenkabschnitt einwirkende Gurtkraft in Längsrichtung der Vorrichtung umlenkbar und/oder auf die beiden Umlenkelemente übertragbar ist. Das Leitelement bewirkt somit, dass die im Bereich der Gurtreserve anliegende Gurtkraft derart umgelenkt wird, dass die beiden Umlenkelemente in Längsrichtung der Vorrichtung voneinander weggedrückt werden. Auch in diesem Fall wird somit die Gurtkraft auf das Zerstörungselement übermittelt, das bis zum Erreichen des Gurtkraftschwellwertes die beiden Umlenkelemente im ersten Abstand hält.

Diesbezüglich ist es vorteilhaft, wenn das Leitelement mit seinen beiden Enden mit dem jeweils zugeordneten Umlenkelemente kraftübertragend verbunden ist.

Auch ist es vorteilhaft, wenn das Leitelement zwei Übertragungsabschnitte aufweist. Diese schließen sich vorteilhafterweise an den mittig zwischen diesen beiden angeordneten Umlenkabschnitt an. Ferner sind die beiden Übertragungsabschnitte des Leitelements druckkraftübertragend ausgebildet und/oder druckkraftübertragend mit dem jeweils zugeordneten Umlenkelemente verbunden. Die im Bereich der Gurtreserve auf den Umlenkabschnitt einwirkende Gurtkraft wird somit über die Übertragungsabschnitte in die Umlenkabschnitt abgeleitet und/oder derart umgelenkt, dass die beiden Umlenkelemente in Längsrichtung der Vorrichtung auseinandergedrückt werden und/oder die Gurtkraft mittelbar über die Umlenkabschnitte in das Zerstörungselement eingeleitet wird.

Vorteilhaft ist es, wenn das Leitelement länger ist als der erste Abstand.

Auch ist es vorteilhaft, wenn das Leitelement elastisch und/oder flexibel ausgebildet ist. Hierdurch kann das Leitelement der Bewegung der beiden Umlenkelemente folgen, wenn diese bei einer Zerstörung des Zerstörungselement aus ihrer durch den ersten Abstand definierten ersten Position voneinander weg in eine durch den zweiten Abstand definierte zweite Position, insbesondere in Längsrichtung der Vorrichtung und/oder translatorisch, bewegt werden.

Vorteilhaft ist es, wenn das Leitelement als Band ausgebildet ist. Auch ist es vorteilhaft, wenn das Leitelement aus einem Kunststoff oder Metall ausgebildet ist. Des Weiteren ist es vorteilhaft, wenn sich das Leitelement aufgewölbt über das Zerstörungselement in Längsrichtung der Vorrichtung erstreckt. Vorteilhaft ist es, wenn die Vorrichtung eine Polsterung aufweist. Die Polsterung ist vorzugsweise derart ausgebildet, dass diese zumindest eines der vorstehenden Merkmale der Vorrichtung umgibt und/oder ein gekapselt. Hierdurch kann der Komfort verbessert werden, wenn die Vorrichtung insbesondere im Schulterbereich einer angeschnallten Person anliegt. Die Polsterung kann einen Hohlraum zum Aufnehmen zumindest eines Teils der vorstehend genannten Merkmale der Vorrichtung aufweisen. Des Weiteren ist es vorteilhaft, wenn die Polsterung einen Verschluss, insbesondere Druccknöpfe, umfasst, damit dieser Hohlraum geöffnet und wieder verschlossen werden kann.

Vorgeschlagen wird ferner ein Kindersitz mit einer Vorrichtung für einen Sicherheitsgurt zum teilweisen Absorbieren einer bei Rückhaltefällen auftretenden Gurtkraft. Die Vorrichtung ist gemäß der vorangegangenen Beschreibung ausgebildet, wobei die genannten Merkmale einzeln oder in beliebiger Kombination vorhanden sein können.

Vorteilhaft ist es, wenn die Vorrichtung in den Kindersitz integriert ist. Diesbezüglich ist es vorteilhaft, wenn die Vorrichtung an einem fest im Kindersitz integrierten Kindersitzgurt befestigt ist. Die Vorrichtung ist vorteilhafterweise fest oder lösbar mit dem Kindersitz, insbesondere mit dem Kindersitzgurt, verbunden.

Weitere Vorteile der Erfindung sind in den nachfolgenden Ausführungsbeispielen beschrieben. Es zeigt:
- **Figur 1**: eine schematische Seitenansicht einer Vorrichtung mit einem Zerstörungselement zum zumindest teilweise Absorbieren einer bei Rückhaltefällen auftretenden Gurtkraft,
- **Figur 2**: eine schematische Seitenansicht der Vorrichtung mit zerstörtem Zerstörungselement,
- **Figur 3**: eine schematische Seitenansicht der Vorrichtung gemäß einem zweiten Ausführungsbeispiel,
- **Figur 4**: einen schematischen Detailausschnitt eines Zerstörungselements mit Nähten und
- **Figur 5**: eine schematische Perspektivansicht einer an einem Sicherheitsgurt lösbar befestigten Vorrichtung mit lösbar befestigten Zusatzkomponenten.

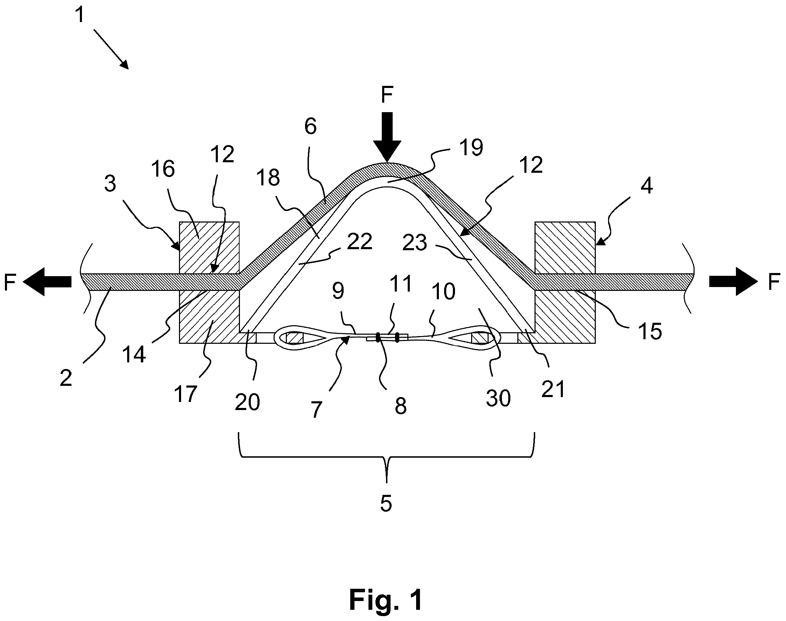

Figur 1 zeigt eine Vorrichtung 1 für einen Sicherheitsgurt 2 eines vorliegend nicht dargestellten Auto- und/oder Kindersitzes. Die Vorrichtung 1 kann nachträglich an einen im Auto fest installierten Sicherheitsgurt 2 montiert werden. Alternativ oder zusätzlich kann die Vorrichtung 1 fest oder aber auch nachträglich an einen Sicherheitsgurt 2 eines Kindersitzes Die Vorrichtung 1 ist vorzugsweise derart montiert, dass sie sich bei angelegtem Sicherheitsgurt 2 im Schulterbereich der angeschnallten Person befindet.

Die Vorrichtung 1 dient dazu, um zumindest teilweise die bei einem Rückhaltefall, beispielsweise einem Unfall, auftretende Gurtkraft F zumindest teilweise zu absorbieren. Hierdurch können Verletzungen der angeschnallten Person, insbesondere im Nackenbereich, vermieden oder zumindest reduziert werden.

In Figur 1 ist die Vorrichtung 1 schematisch in einer seitlichen Schnittansicht dargestellt. Die Vorrichtung 1 umfasst zwei Umlenkelemente 3, 4, über die der Sicherheitsgurt 2 umgelenkt werden kann. Die beiden Umlenkelemente 3, 4 sind voneinander in Längsrichtung der Vorrichtung 1 im Umfang eines ersten Abstand 5 voneinander beabstandet. Der erste Abstand 5 stellt somit im Wesentlichen den kürzesten Abstand zwischen den beiden Umlenkelementen 3, 4 in Längsrichtung der Vorrichtung 1 dar. Wie aus Figur 1 hervorgeht, ist der Sicherheitsgurt 2 im bestimmungsgemäßen Gebrauch der Vorrichtung 1 im Bereich zwischen den beiden Umlenkelementen 3, 4 derart umgelenkt, dass eine Gurtreserve 6 des Sicherheitsgurts 2 eine im Vergleich zum ersten Abstand 5 größere Länge aufweist. Die Gurtreserve 6 ist somit derjenige Abschnitt des Sicherheitsgurts 2, der sich vom ersten Umlenkelement 3 bis zum zweiten Umlenkelement 4 erstreckt. Vorliegend ist diese Gurtreserve 6 bzw. dieser zwischen den beiden Umlenkelementen 3, 4 angeordnete Abschnitt des Sicherheitsgurts 2 gekrümmt ausgebildet.

Zusätzlich zu den beiden Umlenkelementen 3, 4 umfasst die Vorrichtung 1 ein Zerstörungselement 7. Das Zerstörungselement 7 ist wie auch die Gurtreserve 6 zwischen den beiden Umlenkelementen 3, 4 angeordnet. Die beiden Umlenkelemente 3, 4 sind über das Zerstörungselement 7 miteinander verbunden. Wie aus Figur 1 hervorgeht, erstreckt sich das Zerstörungselement 7 in Längsrichtung der Vorrichtung 1, insbesondere in Längsrichtung parallel. Das Zerstörungselement 7 ist auf Zug belastbar. Des Weiteren ist dieses derart ausgebildet, dass es zerstört wird, sobald die Gurtkraft F einen Gurtkraftschwellwert überschreitet. Bei der Zerstörung des Zerstörungselements 7 wird zumindest ein Teil der Gurtkraft F absorbiert, so dass die auf die angeschnallte Person einwirkende Kraft reduziert wird.

Wie aus Figur 1 hervorgeht, umfasst das Zerstörungselement 7 zumindest eine Sollbruchstelle 8. Die Sollbruchstelle 8 ist derart ausgebildet, dass das Zerstörungselement 7 genau in diesem Bereich zerstört wird, sobald die Gurtkraft F den festgelegten Gurtkraftschwellwert überschreitet. Neben der Sollbruchstelle 8 umfasst das Zerstörungselement 7 des Weiteren einen ersten Teil 9 und einen zweiten Teil 10, die über die Sollbruchstelle 8 fest miteinander verbunden sind. Infolgedessen können die beiden Teile 9, 10 nicht zerstörungsfrei, sondern ausschließlich durch eine Zerstörung der Sollbruchstelle 8 voneinander gelöst werden. Das erste Teil 9 des Zerstörungselement 7 ist dem ersten Umlenkelement 3 zugeordnet und mit diesem an seinem der Sollbruchstelle 8 abgewandten Ende verbunden. Diese Verbindung zwischen dem ersten Teil 9 und dem ersten Umlenkelement 3 kann lösbar ausgebildet sein, so dass ein zerstörtes Zerstörungselement 7 durch ein neues intaktes Zerstörungselement 7 ersetzt werden kann. Des Weiteren ist der erste Teil 9 mit dem zugeordneten ersten Umlenkelement 3 vorzugsweise gelenkig verbunden. Hierdurch können Verspannungen zwischen dem Zerstörungselement 7 und dem ersten Umlenkelement 3 vermieden werden. In analoger Weise ist auch der zweite Teil 10 des Zerstörungselements 7 mit seinem der Sollbruchstelle 8 abgewandten Ende mit dem zweiten Umlenkelement 4 verbunden. Auch in diesem Fall kann die Verbindung lösbar, gelenkig und/oder formschlüssig ausgebildet sein.

Gemäß dem vorliegenden Ausführungsbeispiel ist das Zerstörungselement 7 ein Textilelement. Es ist demnach zumindest teilweise aus einem Textil ausgebildet. Das Textilelement kann bandförmig oder seilförmiges ausgebildet sein. Ebenso ist es denkbar, dass das Textilelement aus mehreren Textilbändern und/oder Textilseilen ausgebildet ist. Ferner kann das Textilelement ein Gelege und/oder ein Gewebe umfassen. Das als Textilelement ausgebildete Zerstörungselement 7 ist somit ausschließlich auf Zug belastbar. Drucckräfte können von diesen nicht aufgenommen werden. Bei einer Ausbildung des Zerstörungselements 7 als Textilelement ist es vorteilhaft, wenn die Sollbruchstelle 8 durch zumindest eine Naht ausgebildet ist, über die die beiden Teile 9, 10 miteinander verbunden sind. Wie aus Figur 1 hervorgeht weisen die beiden Teile 9, 10 gemäß dem vorliegenden Ausführungsbeispiel einen Überlappungsbereich 11 auf. In diesem Überlappungsbereich 11 sind die beiden Teile 9, 10 über zumindest zwei Nähte miteinander verbunden, die zusammen die Sollbruchstelle 8 bilden.

Zusätzlich oder alternativ zur Sollbruchstelle 8 kann das Zerstörungselement 7 aus einem irreversibel verformbaren Material, insbesondere aus einem Kunststoff ausgebildet sein. Dies gilt auch für die nachfolgenden Ausführungsbeispiele.

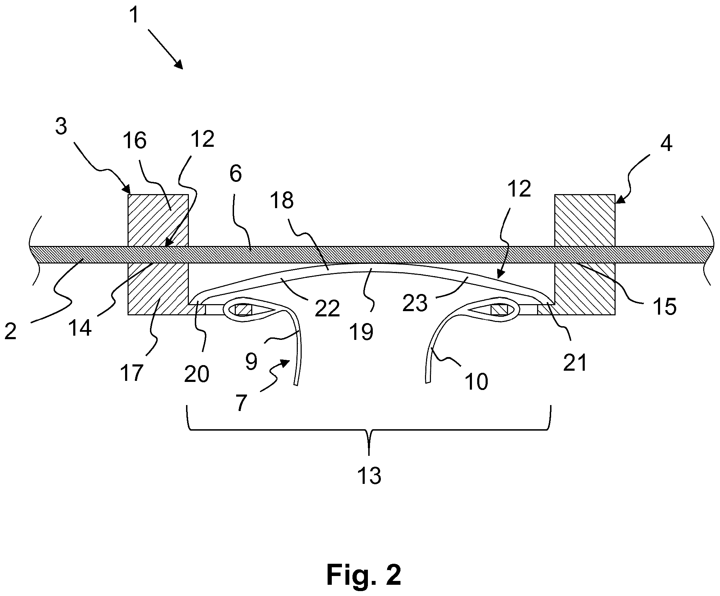

Bei Auftreten eines Rückhaltefalls, d.h. insbesondere bei einem Unfall, wirkt die Gurtkraft F in Längsrichtung des Sicherheitsgurts 2. Diese Gurtkraft F muss nunmehr derart auf die Umlenkelemente 3, 4 übertragen werden, dass diese in Längsrichtung der Vorrichtung 1 voneinander weggedrückt werden. Hierfür umfasst die Vorrichtung 1 zumindest ein Kraftübertragungsmittel 12. Das Kraftübertragungsmittel 12 ist derart ausgebildet, dass mit diesem die Gurtkraft F, insbesondere mittelbar über die beiden Umlenkelemente 3, 4, auf das Zerstörungselement 7 übertragen werden kann. Das Kraftübertragungsmittel 12 bewirkt somit, dass das Zerstörungselement 7 über die Gurtkraft F in Längsrichtung der Vorrichtung 1 auf Zug beansprucht wird. Sobald der über die Sollbruchstelle 8 festgelegte Gurtkraftschwellwert überschritten wird, reißt oder bricht das Zerstörungselement 7 im Bereich seiner Sollbruchstelle 8. Alternativ oder zusätzlich wird das Zerstörungselement zumindest in einem Bereich irreversibel verformt, wenn dieses aus einem irreversibel verformbaren Material ausgebildet ist. Bei zerstörtem Zerstörungselement 7 können sich nunmehr, wie in Fieber 2 dargestellt, die beiden Umlenkelemente 3, 4 voneinander in Längsrichtung der Vorrichtung 1 wegbewegen. Infolgedessen vergrößert sich der in Figur 1 dargestellte erste Abstand 5 zwischen den beiden Umlenkelementen 3, 4 gemäß Figur 2 auf einen zweiten Abstand 13. Vorzugsweise entspricht dieser zweite Abstand 13 der Länge der Gurtreserve 6 des Sicherheitsgurts 2.

Gemäß Figur 1 umfassen die Umlenkelemente 3, 4 jeweils einen Fixiermechanismus 14, 15. Über den Fixiermechanismus 14, 15 des jeweiligen Umlenkelement 3, 4 kann der Sicherheitsgurt 2 lösbar mit dem jeweiligen Umlenkelement 3, 4 verbunden werden. Vorteilhafterweise kann somit ein verrutschen der Vorrichtung 1 in Längsrichtung des Sicherheitsgurts 2 vermieden werden. Gemäß dem vorliegenden Ausführungsbeispiel fixiert der jeweilige Fixiermechanismus 14, 15 den Sicherheitsgurt 2 über ein Verklemme. Hierfür umfasst der jeweilige Fixiermechanismus 14, 15 zwei Klemmbalken 16, 17 auf, die aus Gründen der Übersichtlichkeit nur bei einem der beiden Fixiermechanismus 14, 15 mit Bezugszeichen versehen sind. Die beiden Klemmbalken 16, 17 erstrecken sich in Querrichtung der Vorrichtung 1 bzw. des Sicherheitsgurts 2. Des Weiteren sind die beiden Klemmbalken 16, 17 in Hochrichtung der Vorrichtung 1 übereinander angeordnet. Zwischen diesen beiden Klemmbalken 16, 17 verläuft der Sicherheitsgurt 2, der vorzugsweise kraft- und/oder formschlüssig zwischen diesen beiden fixiert ist. Die beiden Klemmbalken 16, 17 sind über einen nicht näher im Detail dargestellten Klappmechanismus lösbar miteinander verbunden. Hierfür sind die beiden Klemmbalken 16, 17 in Querrichtung der Vorrichtung 1 an ihrem einen Ende über ein vorliegend nicht dargestelltes Gelenk und an ihrem anderen Ende über einen vorliegend ebenfalls nicht dargestellten Verschluss miteinander verbunden.

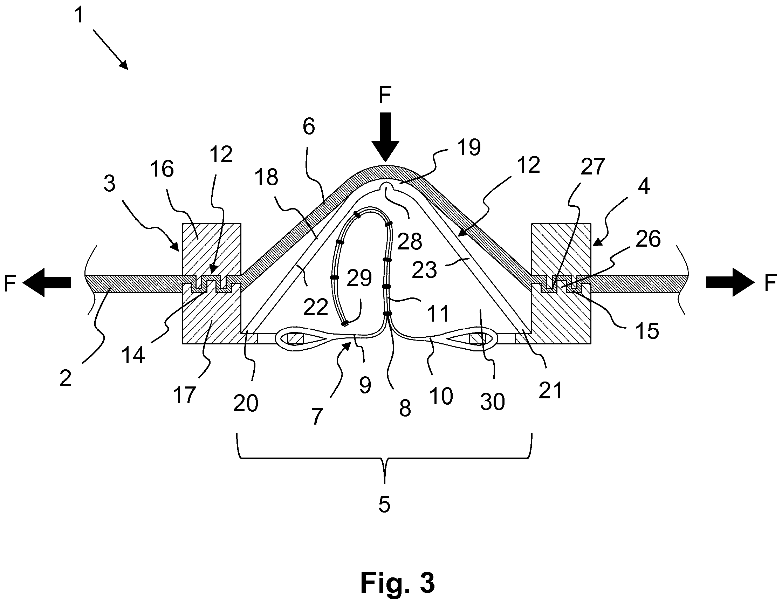

Gemäß dem vorliegenden Ausführungsbeispiel können die beiden Fixiermechanismus 14, 15 als Kraftübertragungsmittel 12 ausgebildet sein. Hierfür muss die Fixierung des Sicherheitsgurtes 2 im Bereich der Fixiermechanismus 14, 15 derart ausgebildet sein, dass die an den beiden äußeren Stirnseiten der Vorrichtung 1 anliegenden Gurtkräfte F unmittelbar auf das jeweilige Umlenkelement 3, 4 übertragen werden können. Vorteilhafterweise sind die Fixiermechanismus 14, 15 hierfür derart ausgebildet, dass der Sicherheitsgurt 2 im jeweils korrespondierenden Abschnitt formschlüssig und/oder kraftschlüssig fixiert ist. Um besonders hohe Kräfte übertragen zu können, ist es vorteilhaft, wenn zumindest einer der beiden Klemmbalken 16, 17 auf seiner dem Sicherheitsgurts 2 zugewandten Seite Erhöhungen und/oder Vertiefungen, insbesondere Zähne, aufweist. Dies ist beispielsweise in dem in Figur 3 dargestellten Ausführungsbeispiel gezeigt.

Bei als Kraftübertragungsmittel 12 ausgebildeten Umlenkelementen 3, 4 werden somit die an den beiden äußeren Stirnseiten der Vorrichtung 1 angreifenden Gurtkräfte F unmittelbar auf die jeweils zugeordneten Umlenkelemente 3, 4 übertragen. Von diesen werden die Gurtkräfte F weiter auf das Zerstörungselement 7, insbesondere in dessen Sollbruchstelle 8, geleitet. Die Gurtkräfte F ziehen somit die beiden Umlenkelemente 3, 4 in Längsrichtung der Vorrichtung 1 auseinander, wobei sich deren erste Abstand 5 aufgrund des intakten Zerstörungselements 7 nicht vergrößern kann. Erst wenn die Gurtkräfte F den durch die Sollbruchstelle 8 definierten Gurtkraftschwellwert überschreiten, wird das Zerstörungselement 7 zerstört. Gemäß Figur 2 vergrößert sich somit der erste Abstand 5 zwischen den beiden Umlenkelementen 3, 4 auf den zweiten Abstand 13, wodurch zumindest eine teilweise Absorption der auf die angeschnallte Person einwirkenden Kräfte erfolgt.

In dem in Figur 1 dargestellten Ausführungsbeispiel umfasst die Vorrichtung 1 neben den beiden Umlenkelementen 3, 4 und dem Zerstörungselement 7 ferner ein Leitelement 18. Das Leitelement 18 ist in Längsrichtung der Vorrichtung 1 zwischen den beiden Umlenkelementen 3, 4 angeordnet. Eine Wirkung dieses Leitelement 18 besteht darin, den Sicherheitsgurt 2 im Bereich zwischen den beiden Umlenkelementen 3, 4 derart zu führen, dass dessen Länge größer ist als der erste Abstand 5. Hierdurch kann sichergestellt werden, dass der Sicherheitsgurt 2 zwischen den beiden Umlenkelementen 3, 4 die Gurtreserve 6 aufweist. Hierfür umfasst das Leitelement 18 einen Umlenkabschnitt 19. Dieser Umlenkabschnitt 19 ist gegenüber den beiden Umlenkelementen 3, 4 in Hochrichtung der Vorrichtung 1 versetzt angeordnet. Infolgedessen wird der Sicherheitsgurt 2 Abbildung gemäß von links nach rechts durch das erste Umlenkelement 3 nach links, durch den Umlenkabschnitt 19 des Leitelement 18 nach rechts und anschließend über das zweite Umlenkelement 4 erneut nach links umgelenkt. Hierdurch ist sichergestellt, dass die Länge des Sicherheitsgurts 2 im Bereich zwischen den beiden Umlenkelementen 3, 4 größer ist als der kürzeste Abstand zwischen diesen beiden Umlenkelementen 3, 4. Vorteilhafterweise weist des Sicherheitsgurts 2 somit stets eine entsprechende Gurtreserve 6 auf.

Zusätzlich oder alternativ zu den Fixiermechanismen 14, 15 kann auch das Leitelement 18 als Kraftübertragungsmittel 12 dienen und/oder als solches ausgebildet sein. So kann das Leitelement 18 derart ausgebildet sein, dass mittels diesem eine in Hochrichtung der Vorrichtung 1 auf den Umlenkabschnitt in Richtung des Zerstörungselements 7 einwirkende Gurtkraft F in Längsrichtung der Vorrichtung 1 umgelenkt und auf die beiden Umlenkelemente 3, 4 übertragen wird. Dies kann beispielsweise dadurch erfolgen, dass das Leitelement 18 mit seinen beiden Enden 20, 21 mit dem jeweils zugeordneten Umlenkelement 3, 4 kraftübertragend verbunden ist. Eine entsprechende Kraftübertragung von Umlenkabschnitt 19 auf die beiden Umlenkelemente 3, 4 kann, wie in Figur 1 dargestellt, über entsprechende Übertragungsabschnitte 22, 23 erfolgen. Gemäß Figur 1 ist der erste Übertragungsabschnitt 22 zwischen dem ersten Umlenkelement 3 und dem Umlenkabschnitt 19 angeordnet. Der zweite Übertragungsabschnitt 23 ist zwischen dem zweiten Umlenkelement 4 und dem Umlenkabschnitt 19 angeordnet. Infolgedessen befindet sich der Umlenkabschnitt 19 zwischen den beiden Übertragungsabschnitte 22, 23. Die beiden Übertragungsabschnitte 22, 23 Verbinden somit den mittigen Umlenkabschnitt 19 druckkraftübertragend mit dem jeweils zugeordneten Umlenkelement 3, 4.

Insbesondere, wenn der Sicherheitsgurt 2 im Bereich der beiden Fixiermechanismen 14, 15 nicht vollständig fixiert ist, sondern noch einen gewissen Bewegungsspielraum aufweist, drückt der Sicherheitsgurt 2 im Bereich seiner Gurtreserve 6 bei auftretenden Gurtkraft F abbildungsgemäß von oben auf den Umlenkabschnitt 19 des Leitelement 18. Über die beiden Übertragungsabschnitte 22, 23 wird diese in Hochrichtung der Vorrichtung 1 wirkende Gurtkraft F im Wesentlichen in Längsrichtung der Vorrichtung 1 umgelenkt und in die Umlenkelemente 3, 4 eingeleitet. Hierdurch werden die beiden Umlenkelemente 3, 4 nach außen bzw. voneinander weggedrückt, wobei eine voneinander weg gerichtete Relativbewegung aufgrund des intakten Zerstörungselements 7 vermieden wird. Erst, wenn die Gurtkraft F den Gurtkraftschwellwert überschreitet, wird das Zerstörungselement 7, insbesondere durch Zerbrechen und/oder Zerreißen, zerstört. Sobald dies erfolgt ist, können sich die beiden Umlenkelemente 3, 4, wie in Figur 2 dargestellt, voneinander wegbewegen, wobei sowohl durch das Zerstören des Zerstörungselements 7 als auch durch das voneinander Wegbewegen im Umfang der Gurtreserve 6 eine zumindest teilweise Absorption der auftretenden Gurtkraft F bewirkt wird.

Vorteilhaft ist es, wenn das Leitelement 18 zur Bewerkstelligung zumindest einer der vorstehend genannten Aufgaben länger ist als der erste Abstand 5. Auch ist es vorteilhaft, wenn das Leitelement 18 elastisch und/oder flexibel ausgebildet ist. Gemäß dem vorliegenden Ausführungsbeispiel ist das Leitelement 18 insbesondere als gebogenes Band, insbesondere aus einem Kunststoff oder Metall, ausgebildet.

Gemäß der vorangegangenen Beschreibung kann das zumindest eine Kraftübertragungsmittel 12 somit durch die Fixiermechanismen 14, 15 der beiden Umlenkelemente 3, 4 und/oder durch das Leitelement 18 ausgebildet sein.

Figur 3 zeigt ein weiteres Ausführungsbeispiel der Vorrichtung 1. Bei der nachfolgenden Beschreibung des in Figur 3 dargestellten Ausführungsbeispiels werden für Merkmale, die im Vergleich zum in Figur 1 dargestellten ersten Ausführungsbeispiel in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und/oder Wirkweise der vorstehend bereits beschriebenen Merkmale.

Um besonders hohe Kräfte übertragen zu können, weist zumindest einer der beiden Klemmbalken 16, 17 bei dem in Figur 3 dargestellten Ausführungsbeispiel auf seiner dem Sicherheitsgurt 2 zugewandten Seite Erhöhungen 26 und Vertiefungen 27 auf. Des Weiteren weist das Leitelement 18 bei diesem Ausführungsbeispiel eine Materialausdünnung 28, insbesondere eine Quernut, auf. Diese Materialausdünnung 28 ist vorliegend im Umlenkabschnitt 19 des Leitelements 18 ausgebildet. Hierdurch kann eine Sollknickstelle des Leitelements 18 definiert werden. Diese Sollknickstelle ist vorliegend im in Figur 3 dargestellten intakten Zustand des Zerstörungselements 7 im Hochpunkt des Leitelements 18 ausgebildet.

Ein weiterer Unterschied zwischen dem in Figur 3 und in Figur 1 dargestellten Ausführungsbeispiel ist in der Ausgestaltung des Überlappungsbereichs 11 zu sehen. So liegen bei dem in Figur 3 dargestellten Ausführungsbeispiel die Unterseiten der beiden Teile 9, 10 des Zerstörungselements 7 aneinander. Hierdurch weist das Zerstörungselement 7 ein freies Ende 29 auf. Dieses freie Ende 29 befindet sich innerhalb eines Hohlraums 30 der Vorrichtung 1. Vorteilhafterweise kann der Überlappungsbereich 11 hierdurch im Vergleich zu dem in Figur 1 dargestellten Ausführungsbeispiel länger ausgebildet werden. Hierdurch können wiederum mehrere Nähte angebracht werden, wodurch die Festigkeit des Zerstörungselements 7 erhöht werden kann.

In einem vorliegend nicht dargestellten Ausführungsbeispiel kann die in Figur 1 und 3 dargestellte Vorrichtung 1 des Weiteren eine Polsterung umfassen, in der zumindest die beiden Umlenkelemente 3, 4 als auch das Zerstörungselement 7 aufgenommen sind. Hierdurch wird der Komfort beim Anliegen der Vorrichtung 1 im Schulterbereich eines Benutzers verbessert. Die Polsterung kann einen Hohlraum aufweisen, in dem zumindest Teile der Vorrichtung 1 eingebettet aufgenommen sind. Des Weiteren kann die Polsterung einen Schnellverschluss, insbesondere Druckknöpfe, aufweisen über den diese schnell montiert sowie demontiert werden kann.

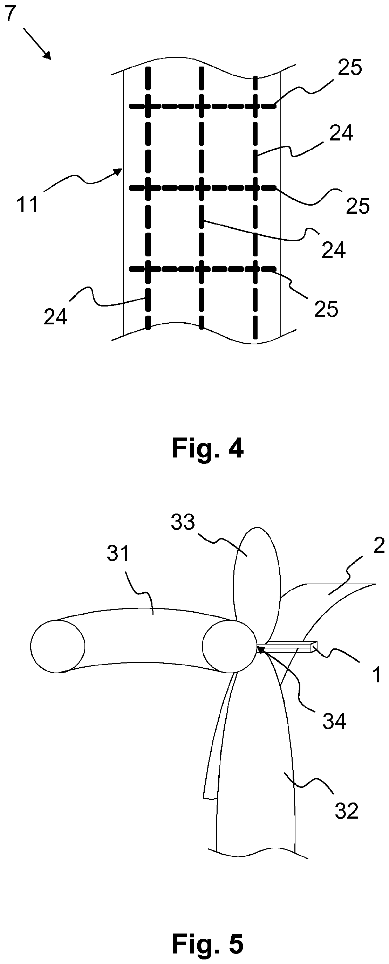

In Figur 4 ist ein Teilausschnitt des Überlappungsbereichs 11 in einer Draufsicht dargestellt, wie dieser beispielsweise bei dem in Figur 1 und/oder 3 dargestellten Ausführungsbeispiel ausgebildet sein kann. Wie der Draufsicht in Figur 4 zu entnehmen ist, können die beiden Teile 9, 10 des Zerstörungselements 7 anhand zumindest einer Längsnaht 24 und/oder anhand zumindest einer Quernaht 25 miteinander verbunden sein. Die beiden Teile 9, 10 können somit nur durch Zerstörung der zumindest einen Naht voneinander gelöst werden.

Figur 5 zeigt eine perspektivische Ansicht des Sitzbereichs in einem Fahrzeug. Die Vorrichtung 1 ist hierbei lösbar mit dem Sicherheitsgurt 2, insbesondere im oberen Schulterbereich, verbunden. Insbesondere hierfür kann die Vorrichtung 1 gemäß der vorangegangenen Beschreibung ausgebildet sein, wobei die genannten Merkmale einzeln oder in beliebiger Kombination vorhanden sein können. Die lösbar mit dem Sicherheitsgurt 2 verbundene Vorrichtung 1 weist eine Verbindungsschnittstelle 34 auf. Über diese Verbindungsschnittstelle 34 können zusätzliche Komponenten lösbar mit der Vorrichtung 1 verbunden werden. In dem in Figur 5 dargestellten Ausführungsbeispiel ist ein Nackenkissen 31 lösbar mit der Vorrichtung 1 verbunden. Zusätzlich oder alternativ ist ein erstes Seitenaufprallkissen 32 und/oder ein zweites Seitenaufprallkissen 33 über die Verbindungsschnittstelle 34 mit der Vorrichtung 1 lösbar verbunden. Das erste Seitenaufprallkissen 32 erstreckt sich hierbei seitlich am Körper der zu schützenden Person entlang. Das zweite Seitenaufprallkissen 33 erstreckt sich von der Vorrichtung 1 in der entgegengesetzten Richtung, d.h. abbildungsgemäß nach oben, weg. Hierdurch befindet sich das zweite Seitenaufprallkissen 33 im Kopfbereich der zu schützenden Person. Das erste und/oder zweite Seitenaufprallkissen 33 kann mit Luft gefüllt sein.

### Bezugszeichenliste

- 1: Vorrichtung
- 2: Sicherheitsgurt
- 3: erstes Umlenkelement
- 4: zweites Umlenkelement
- 5: erster Abstand
- 6: Gurtreserve
- 7: Zerstörungselement
- 8: Sollbruchstelle
- 9: erstes Teil
- 10: zweites Teil
- 11: Überlappungsbereich
- 12: Kraftübertragungsmittel
- 13: zweiter Abstand
- 14: erster Fixiermechanismus
- 15: zweiter Fixiermechanismus
- 16: erster Klemmbalken
- 17: zweiter Klemmbalken
- 18: Leitelement
- 19: Umlenkabschnitt
- 20: erstes Ende des Leitelements
- 21: zweites Ende des Leitelements
- 22: erster Übertragungsabschnitt
- 23: zweiter Übertragungsabschnitt
- 24: Längsnaht
- 25: Quernaht
- 26: Erhöhung
- 27: Vertiefung
- 28: Materialausdünnung
- 29: freies Ende
- 30: Hohlraum
- 31: Nackenkissen
- 32: erstes Seitenaufprallkissen
- 33: zweites Seitenaufprallkissen
- 34: Verbindungsschnittstelle

- F: Gurtkraft

## Patentansprüche

1. Vorrichtung (1) für einen Sicherheitsgurt (2) eines Auto- und/oder Kindersitzes zum teilweisen Absorbieren einer bei Rückhaltefällen auftretenden Gurtkraft (F)
mit zwei Umlenkelementen (3, 4), die zueinander in Längsrichtung der Vorrichtung (1) einen ersten Abstand (5) aufweisen und
über die der dafür vorgesehene Sicherheitsgurt (2) im bestimmungsgemäßen Gebrauch der Vorrichtung (1) derart umlenkbar ist, dass eine sich zwischen den beiden Umlenkelementen (3, 4) anordenbare Gurtreserve (6) des Sicherheitsgurts (2) eine im Vergleich zum ersten Abstand (5) größere Länge aufweist,
mit einem die beiden Umlenkelemente (3, 4) miteinander verbindenden Zerstörungselement (7), und
mit einem derart ausgebildeten Kraftübertragungsmittel (12),
dass mit diesem die Gurtkraft (F) auf das Zerstörungselement (7) übertragbar ist, so dass das Zerstörungselement (7) bei Überschreiten eines Gurtkraftschwellwertes zerstörbar und hierdurch der erste Abstand (5) zwischen den beiden Umlenkelementen (3, 4) auf einen zweiten Abstand (13) vergrößerbar ist,
**dadurch gekennzeichnet,**
**dass** das Kraftübertragungsmittel (12) derart ausgebildet ist,
**dass** das Zerstörungselement (7) über das Kraftübertragungsmittel (12) auf Zug belastbar ist und in Längsrichtung der Vorrichtung mit der Gurtkraft beaufschlagt wird.

2. Vorrichtung nach dem vorherigen Anspruch, **dadurch gekennzeichnet, dass** sich das Zerstörungselement (7) in Längsrichtung der Vorrichtung (1) erstreckt.

3. Vorrichtung nach einem oder mehreren der vorherigen Ansprüche, **dadurch gekennzeichnet, dass** das Zerstörungselement (7) aus einem sich bei Überschreiten der Gurtschwellkraft irreversibel verformbaren oder zerreißbaren Material, insbesondere einem Gummi oder einem Kunststoff, ausgebildet ist und/oder ein, insbesondere band- oder seilförmiges, Textilelement ist.

4. Vorrichtung nach einem oder mehreren der vorherigen Ansprüche, **dadurch gekennzeichnet, dass** das Zerstörungselement (7) eine Sollbruchstelle (8), insbesondre zumindest eine Naht, aufweist.

5. Vorrichtung nach einem oder mehreren der vorherigen Ansprüche, **dadurch gekennzeichnet, dass** das Zerstörungselement (7) ein dem ersten Umlenkelement (3) zugeordnetes erstes Teil (9) und ein dem zweiten Umlenkelement (4) zugeordnetes zweites Teil (10) umfasst, die über die Sollbruchstelle (8) miteinander verbunden sind.

6. Vorrichtung nach einem oder mehreren der vorherigen Ansprüche, **dadurch gekennzeichnet, dass** die beiden Teile (9, 10) jeweils mit ihrem der Sollbruchstelle (8) abgewandten Ende mit dem jeweils zugeordneten Umlenkelement (3, 4) verbunden sind.

7. Vorrichtung nach einem oder mehreren der vorherigen Ansprüche, **dadurch gekennzeichnet, dass** die Umlenkelemente (3, 4) jeweils einen Fixiermechanismus (14, 15) umfassen, mit dem der dafür vorgesehene Sicherheitsgurt (2) derart an dem Umlenkelement (3, 4) fixierbar ist, dass die Gurtkraft (F) auf das Umlenkelement (3, 4) übertragbar ist.

8. Vorrichtung nach einem oder mehreren der vorherigen Ansprüche, **dadurch gekennzeichnet, dass** der Fixiermechanismus (14, 15) zwei sich in Querrichtung der Vorrichtung (1) erstreckende und/oder in Hochrichtung der Vorrichtung (1) übereinander angeordnete Klemmbalken (16, 17) umfasst, zwischen denen der Sicherheitsgurt (2) kraft- und/oder formschlüssig fixierbar ist.

9. Vorrichtung nach einem oder mehreren der vorherigen Ansprüche, **dadurch gekennzeichnet, dass** die Vorrichtung (1) ein in Längsrichtung zwischen den beiden Umlenkelementen (3, 4) angeordnetes Leitelement (18) für die Gurtreserve (6) umfasst.

10. Vorrichtung nach einem oder mehreren der vorherigen Ansprüche, **dadurch gekennzeichnet, dass** das Leitelement (18) einen gegenüber den Umlenkelementen (3, 4) in Hochrichtung der Vorrichtung (1) versetzten Umlenkabschnitt (19) aufweist, mit dem der Sicherheitsgurt (2) in Hochrichtung der Vorrichtung (1) gegenüber den beiden Umlenkelementen (3, 4) auslenkbar ist.

11. Vorrichtung nach einem oder mehreren der vorherigen Ansprüche, **dadurch gekennzeichnet, dass** das Leitelement (18) derart ausgebildet ist, dass mittels diesem eine in Hochrichtung der Vorrichtung (1) auf den Umlenkabschnitt (19) einwirkende Gurtkraft (F) in Längsrichtung der Vorrichtung (1) umlenkbar und auf die beiden Umlenkelemente (3, 4) übertragbar ist.

12. Vorrichtung nach einem oder mehreren der vorherigen Ansprüche, **dadurch gekennzeichnet, dass** das Leitelement (18) mit seinen beiden Enden mit dem jeweils zugeordneten Umlenkelement (3, 4) kraftübertragend verbunden ist.

13. Vorrichtung nach einem oder mehreren der vorherigen Ansprüche, **dadurch gekennzeichnet, dass** das Leitelement (18) zwei Übertragungsabschnitte (22, 23) aufweist, die sich an den mittigen Umlenkabschnitt (19) anschließen und diesen druckkraftübertragend mit dem jeweils zugeordneten Umlenkelement (3, 4) verbinden.

14. Vorrichtung nach einem oder mehreren der vorherigen Ansprüche, **dadurch gekennzeichnet, dass** das Leitelement (18) länger ist als der erste Abstand (5),
elastisch und/oder flexibel ausgebildet ist und/oder ein gebogenes Band, insbesondere aus einem Kunststoff oder Metall ist.

15. Kindersitz mit einer Vorrichtung (1) für einen Sicherheitsgurt (2) zum teilweisen Absorbieren einer bei Rückhaltefällen auftretenden Gurtkraft (F), **dadurch gekennzeichnet, dass** die Vorrichtung (1) nach einem oder mehreren der vorherigen Ansprüche ausgebildet ist.

## Claims

1. A device (1) for a safety belt (2) of a car and/or child seat for partially absorbing a belt force (F) occurring in cases of restraint having two deflecting elements (3, 4) having a first spacing (5) from each other in the longitudinal direction of the device (1), and
by means of which the safety belt (2) provided for the same can be deflected when the device (1) is used properly, such that a belt reserve (6) of the safety belt (2) for disposing between the two deflecting elements (3, 4) has a greater length in comparison with the first spacing (5),
having a destructible element (7) connecting the two deflecting elements (3, 4) to each other, and
having a force transmitting means (12) implemented such that the belt force (F) can be transferred to the destructible element (7) so that the destructible element (7) is destructible when a belt force threshold is exceeded and thereby the first spacing (5) between the two deflecting elements (3, 4) can be expanded to a second spacing (13),
**characterized in that**
the force transmitting means (12) is implemented such that the destructible element (7) can be loaded in tension by means of the force transmitting means (12) and the belt force is applied thereto in the longitudinal direction of the device.

2. The device according to the preceding claim, **characterized in that** the destructible element (7) extends in the longitudinal direction of the device (1).

3. The device according to any one or more of the preceding claims, **characterized in that** the destructible element (7) is made of a material for irreversibly deforming or tearing when the belt force threshold is exceeded, particularly of a rubber or a plastic, and/or is a textile element having the shape of a ribbon or of a rope.

4. The device according to any one or more of the preceding claims, **characterized in that** the destructible element (7) comprises a predetermined breaking point (8), particularly at least one seam.

5. The device according to any one or more of the preceding claims, **characterized in that** the destructible element (7) comprises a first part (9) associated with the first deflecting element (3) and a second part (10) associated with the second deflecting element (4), connected to each other by means of the predetermined breaking point (8).

6. The device according to any one or more of the preceding claims, **characterized in that** the two parts (9, 10) are each connected to the associated deflecting element (3, 4) at the end of each opposite the predetermined breaking point (8).

7. The device according to any one or more of the preceding claims, **characterized in that** the deflecting elements (3, 4) each comprise a fixing mechanism (14, 15) by means of which the safety belt (2) provided therefor can be fixed to deflecting element (3, 4) such that the belt force (F) can be transferred to the deflecting element (3, 4).

8. The device according to any one or more of the preceding claims, **characterized in that** the fixing mechanism (14, 15) comprises two clamping bars (16, 17) extending in the transverse direction of the device (1) and/or disposed one above the other in the vertical direction of the device (1), between which the safety belt (2) can be fixed in a force-fit and/or form-fit manner.

9. The device according to any one or more of the preceding claims, **characterized in that** the device (1) comprises a guide element (18) for the belt reserve (6) disposed in the longitudinal direction between the two deflecting elements (3, 4).

10. The device according to any one or more of the preceding claims, **characterized in that** the guide element (18) comprises a deflecting segment (19) offset relative to the deflecting element (3, 4) in the vertical direction of the device (1), by means of which the safety belt (2) can be deflected in the vertical direction of the device (1) relative to the two deflecting elements (3, 4).

11. The device according to any one or more of the preceding claims, **characterized in that** the guide element (18) is implemented such that a belt force (F) acting in a vertical direction of the device (1) can be deflected onto the deflecting segment (19) in the longitudinal direction of the device (1) and can be transferred to the two deflecting elements (3, 4) by means thereof.

12. The device according to any one or more of the preceding claims, **characterized in that** the two ends of the guide element (18) are connected to each associated deflecting element (3, 4) for transferring force.

13. The device according to any one or more of the preceding claims, **characterized in that** the guide element (18) comprises two transfer segments (22, 23) connecting to the center deflecting segment (19) and connecting the same to each associated deflecting element (3, 4) for transferring compressive force.

14. The device according to any one or more of the preceding claims, **characterized in that** the guide element (18) is longer than the first spacing (5),
is elastic and/or flexible in design, and/or
is a curved ribbon, particularly made of plastic or metal.

15. A child seat having a device (1) for a safety belt (2) for partially absorbing a belt force (F) occurring in case of restraint, **characterized in that** the device (1) is implemented according to any one or more of the preceding claims.

## Revendications

1. Dispositif (1) pour une ceinture de sécurité (2) d'un siège de véhicule et/ou pour enfant pour absorber partiellement une force (F) de ceinture se produisant en cas de retenue,
avec deux éléments de renvoi (3, 4) qui présentent une première distance (5) l'un par rapport à l'autre dans le sens longitudinal du dispositif (1) et
par lesquels la ceinture de sécurité (2) prévue à cet effet, lors d'une utilisation du dispositif (1) conformément à sa destination, peut être déviée de sorte qu'une réserve de ceinture (6) de la ceinture de sécurité (2), qui peut être disposée entre les deux éléments de renvoi (3, 4), présente une longueur plus importante en comparaison avec la première distance (5),
avec un élément de destruction (7) reliant l'un à l'autre les deux éléments de renvoi (3, 4), et
avec un moyen de transmission (12) de force conçu de sorte que, à l'aide de celui-ci, la force (F) de la ceinture soit transmissible à l'élément de destruction (7), de sorte que l'élément de destruction (7) puisse être détruit en cas de dépassement d'une valeur seuil de la force de la ceinture et, de ce fait, que la première distance (5) entre les deux éléments de renvoi (3, 4) puisse être augmentée à une seconde distance (13),
**caractérisé en ce que**
le moyen de transmission (12) de force se présente sous une forme telle que le moyen de destruction (7) puisse être soumis à une charge de traction via le moyen de transmission (12) de force et soit soumis à la force de la ceinture dans le sens longitudinal du dispositif.

2. Dispositif selon la revendication précédente, **caractérisé en ce que** l'élément de destruction (7) s'étend dans le sens longitudinal du dispositif (1).

3. Dispositif selon l'une quelconque ou plusieurs des revendications précédentes, **caractérisé en ce que** l'élément de destruction (7) est formé d'un matériau, en particulier un caoutchouc ou une matière plastique, qui est irréversiblement déformable ou déchirable en cas de dépassement d'une valeur seuil de la force de la ceinture et/ou est un élément textile, en particulier sous la forme d'une bande ou d'un cordage.

4. Dispositif selon l'une quelconque ou plusieurs des revendications précédentes, **caractérisé en ce que** l'élément de destruction (7) présente un point de rupture nominale (8), en particulier au moins une couture.

5. Dispositif selon l'une quelconque ou plusieurs des revendications précédentes, **caractérisé en ce que** l'élément de destruction (7) comprend une première partie (9) associée au premier élément de renvoi (3) et une seconde partie (10) associée au second élément de renvoi (4), qui sont reliées l'une avec l'autre via le point de rupture nominale (8).

6. Dispositif selon l'une quelconque ou plusieurs des revendications précédentes, **caractérisé en ce que** les deux parties (9, 10) sont chacune reliées à l'élément de renvoi (3, 4) respectivement associé par leur extrémité éloignée du point de rupture nominale (8).

7. Dispositif selon l'une quelconque ou plusieurs des revendications précédentes, **caractérisé en ce que** les éléments de renvoi (3, 4) comprennent chacun un mécanisme de fixation (14, 15) avec lequel la ceinture de sécurité (2) prévue à cet effet peut être fixée à l'élément de renvoi (3, 4) de sorte que la force (F) de la ceinture soit transmissible à l'élément de renvoi (3, 4).

8. Dispositif selon l'une quelconque ou plusieurs des revendications précédentes, **caractérisé en ce que** le mécanisme de fixation (14, 15) comprend deux barres de serrage (16, 17) s'étendant dans la direction transversale du dispositif (1) et/ou disposées l'une au-dessus de l'autre dans la direction verticale du dispositif (1), entre lesquelles la ceinture de sécurité (2) peut être fixée par adhérence et/ou complémentarité de formes.

9. Dispositif selon l'une quelconque ou plusieurs des revendications précédentes, **caractérisé en ce que** le dispositif (1) comprend un élément de guidage (18) pour la réserve (6) de ceinture disposé entre les deux éléments de renvoi (3, 4), dans la direction longitudinale.

10. Dispositif selon l'une quelconque ou plusieurs des revendications précédentes, **caractérisé en ce que** l'élément de guidage (18) présente une section de renvoi (19) qui est décalée par rapport aux éléments de renvoi (3, 4) dans la direction verticale du dispositif (1), par laquelle la ceinture de sécurité (2) peut être déviée dans la direction verticale du dispositif (1) par rapport aux deux éléments de renvoi (3, 4).

11. Dispositif selon l'une quelconque ou plusieurs des revendications précédentes, **caractérisé en ce que** l'élément de guidage (18) se présente sous une forme telle que, au moyen de celui-ci, une force (F) de la ceinture agissant sur la section de renvoi (19) dans la direction verticale du dispositif (1) puisse être déviée dans la direction longitudinale du dispositif (1) et soit transmissible aux deux éléments de renvoi (3, 4).

12. Dispositif selon l'une quelconque ou plusieurs des revendications précédentes, **caractérisé en ce que** l'élément de guidage (18) est relié en transmission de force, par ses deux extrémités, à l'élément de renvoi (3, 4) respectivement associé.

13. Dispositif selon l'une quelconque ou plusieurs des revendications précédentes, **caractérisé en ce que** l'élément de guidage (18) présente deux sections de transmission (22, 23) qui se raccordent à la section de renvoi (19) centrale et relient cette dernière en transmission de force de compression à l'élément de renvoi (3, 4) respectivement associé.

14. Dispositif selon l'une quelconque ou plusieurs des revendications précédentes, **caractérisé en ce que** l'élément de guidage (18) est plus long que la première distance (5),
se présente sous une forme élastique et/ou souple et/ou est une bande pliée, en particulier en matière plastique ou en métal.

15. Siège pour enfant avec un dispositif (1) pour une ceinture de sécurité (2) pour absorber partiellement une force (F) de ceinture se produisant en cas de retenue, **caractérisé en ce que** le dispositif (1) se présente sous une forme selon l'une quelconque ou plusieurs des revendications précédentes.
